Europäisches Patentamt

European Patent Office

Office européen des brevets

(19)

(11) Veröffentlichungsnummer: **0 054 720**
**B1**

(12) # EUROPÄISCHE PATENTSCHRIFT

(45) Veröffentlichungstag der Patentschrift:
**18.07.84**

(21) Anmeldenummer: **81109242.8**

(22) Anmeldetag: **29.10.81**

(51) Int. Cl.³: **F 24 F 6/04,** F 28 C 1/16,
F 28 F 25/08, F 28 C 1/04

(54) Vorrichtung an einem Kontaktkörper für Flüssigkeit und Gas zur Verhinderung der Mitreissung von Flüssigkeit.

(30) Priorität: **19.12.80 SE 8008976**

(43) Veröffentlichungstag der Anmeldung:
**30.06.82 Patentblatt 82/26**

(45) Bekanntmachung des Hinweises auf die Patenterteilung:
**18.07.84 Patentblatt 84/29**

(84) Benannte Vertragsstaaten:
**AT BE CH DE FR GB IT LI NL**

(56) Entgegenhaltungen:
**DE - A - 2 840 317**
**DE - B - 1 042 616**
**DE - C - 955 953**
**FR - A - 2 284 358**

(73) Patentinhaber: **Fläkt Aktiebolag, Sickla Allé 13,
S-131 34 Nacka (SE)**

(72) Erfinder: **Holmberg, Roy, Brushanevägen 55,
S-552 75 Jönköping (SE)**
Erfinder: **Josefsson, Ingemar, Beckasinvägen 39,
S-552 75 Jönköping (SE)**

(74) Vertreter: **Eitle, Werner, Dipl.-Ing. et al, Hoffmann. Eitle
& Partner Patentanwälte Arabellastrasse 4,
D-8000 München 81 (DE)**

**Beschreibung**

Die vorliegende Erfindung betrifft eine Vorrichtung an einem Kontaktkörper für Flüssigkeit und Gas gem. dem ersten Teil des Patentanspruches 1.

Der Kontaktkörper ist aus mehreren aufeinanderstehenden Kontaktblöcken zusammengesetzt, die aus einer Anzahl paralleler, gefalteter oder gewellter Kontaktplatten bestehen können, die mit Hilfe von Abstandsgliedern gem. z. B. der britischen Patentschrift 1 496 127 getrennt oder sich gegeneinander abstützend und so gefaltet sind, daß zwischen den Platten gem. z. B. der britischen Patentschrift 1 532 170 durchgehende Kanäle gebildet werden. Dies ermöglicht das gleichzeitige Strömen des Gases mit im wesentlichen horizontaler und der Flüssigkeit mit im wesentlichen horizontaler und der Flüssigkeit mit im wesentlichen vertikaler Strömungsrichtung. Die Flüssigkeit und das Gas können Wasser bzw. Luft sein, und wichtige Anwendungsgebiete der Erfindung sind Luftbefeuchter und Kühltürme. Die Erfindung wird nachstehend im Zusammenhang mit Luftbefeuchtern beschrieben, ist jedoch nicht auf solche begrenzt.

In einer Lüftungsanlage werden gewöhnlich zur Befeuchtung von Luft Luftbefeuchter vom sog. Einsatztyp angewendet. Bei ihnen wird die eingehende Luft dadurch befeuchtet, daß sie durch einen Kontaktkörper geleitet wird, dessen Oberflächen durch ständiges oder unterbrechendes Wasserbegießen feucht gehalten werden. Die Luft strömt gewöhnlich horizontal durch den Kontaktkörper, während das Wasser am Oberteil des Kontaktkörpers zugeführt wird und dann an dessen Kontaktflächen entlang abwärts fließt. Das Wasser kann beispielsweise mit Hilfe eines durchlöcherten Rohrsystemes zugeführt werden. Der Kontaktkörper in einem Luftbefeuchter besteht bei einer häufig vorkommenden Ausführung aus einer Anzahl Blöcke, die so aufeinander angeordnet sind, daß zwischen den Blöcken Verbindungen gebildet werden.

Bei Kontaktkörpern dieses Typs besteht ein Problem insofern, als von den Verbindungen zwischen den Blöcken Wassertropfen im Luftstrom mitgerissen werden, die dann in der Lüftungsanlage Ungelegenheiten bereiten können. Das Mitreißen von Wasser von den Verbindungen geschieht, sobald die Luftgeschwindigkeit einen bestimmten, vom Flüssigkeitsstrom abhängigen Wert übersteigt. Die Gefahr der Mitreißung von Wasser von den Blöcken kann durch Anordnung der Kontaktplatten z. B. gem. der britischen Patentschrift 1 532 170 vermindert werden. Somit erfolgt Wassermitreißung von den Blöcken meistens erst bei einer Luftgeschwindigkeit, die höher ist als die Geschwindigkeit, bei der Wasser von den Verbindungen mitgerissen wird. Der Luftgeschwindigkeit durch den Befeuchter wird infolgedessen meistens eine Begrenzung nach oben durch die Gefahr der Wassermitreißung von den Verbindungen gesetzt. Es ist bekannt, dieser Ungelegenheit dadurch entgegenzuwirken, daß in der Verbindung zwischen zwei Blöcken, in Luftstromrichtung stromabwärts, eine Leiste angeordnet wird, die so ausgebildet ist, daß sie das Wasser von der Stromabwärtsbegrenzungsfläche des oberen Blockes sammelt und es zum unteren Block überführt, wobei das Wasser gleichzeitig etwas gegen den Luftstrom geführt wird. Dies hat jedoch zu keinen zufriedenstellenden Ergebnissen geführt, da der Luftgeschwindigkeit fortwährend durch die Gefahr der Wassermitreißung von den Verbindungen (ca. 4 m/s) eine obere Grenze gesetzt wird (vgl. FR-A-2 284 358 bzw. US-A-3 947 532).

Die vorliegende Erfindung hat die Aufgabe, eine Vorrichtung zu schaffen, die die Gefahr des Mitreißens von Flüssigkeit in einer Verbindung zwischen Blöcken in einem Kontaktkörper für Flüssigkeit und Gas so vermindert, daß höhere Luftgeschwindigkeiten durch den Kontaktkörper erzielt werden können. Diese Aufgabe wird durch eine Vorrichtung gem. dem kennzeichnenden Teil des Patentanspruches 1 gelöst. Aus den abhängigen Patentansprüchen gehen zweckdienliche Ausführungsformen hervor. Der Erfindung liegt die Einsicht zugrunde, daß ein den oberen Block in der Verbindung zwischen dem oberen und unteren Block verlassender Wassertropfen vorzugsweise in der Nähe der stromabwärts liegenden oder hinteren Begrenzungslinie der Verbindung in dem im wesentlichen horizontalen Luftstrom durch den Kontaktkörper mitgerissen wird, sobald die Luftgeschwindigkeit einen bestimmten Wert, Größenordnung 2 m/s, übersteigt, und daß eine wirksame Weise zur Verhinderung der Wassermitreißung von der Verbindung bei höheren Luftgeschwindigkeiten durch den Kontaktkörper darin liegt, die Luftgeschwindigkeit in der stromabwärts liegenden Begrenzungslinie der Verbindung und um sie herum stark zu senken. Ein Beispiel einer Ausführungsform der an einem Kontaktkörper bekannter Art angeordneten Erfindung wird nachstehend unter Bezugnahme auf die Zeichnung näher beschrieben, in der

Fig. 1 eine Perspektivansicht eines Kontaktkörpers mit mehreren Kontaktblöcken ist,

Fig. 2 eine Perspektivansicht eines Hindernisses gem. der Erfindung und eines umgebenden Teiles eines oberen und eines unteren Kontaktblockes ist, und

Fig. 3 Querschnitte alternativer Ausführungsformen von Hindernissen sind.

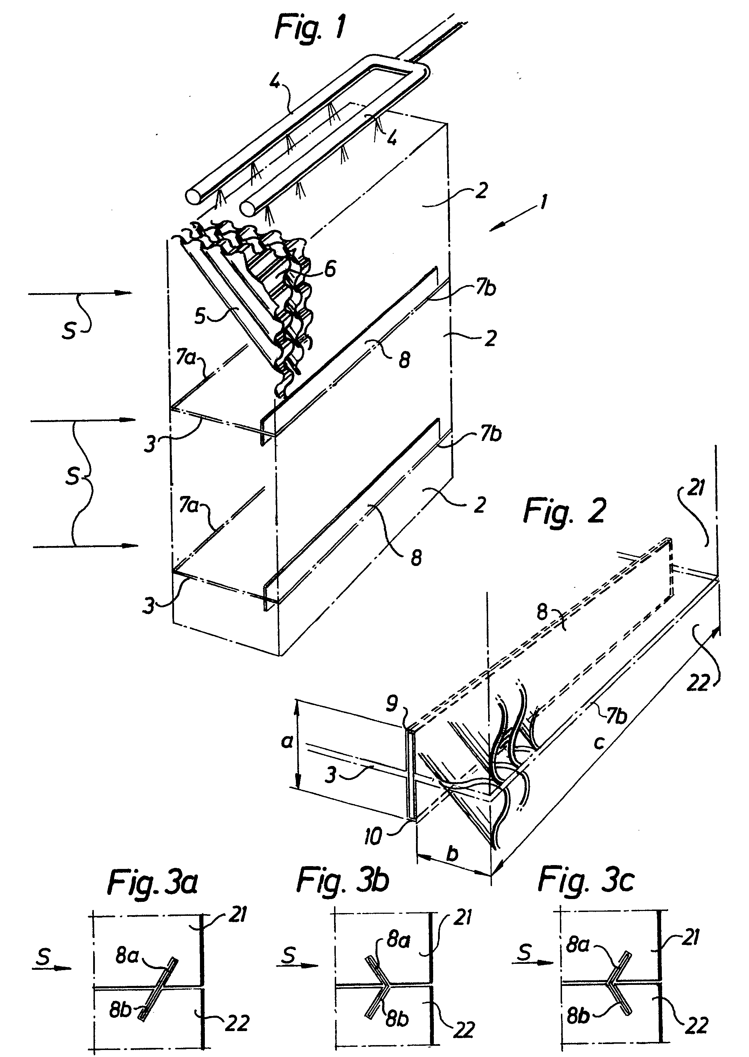

In Fig. 1 ist der Kontaktkörper 1 in einem Luftstrom S angeordnet und aus mehreren aufeinanderstehenden Kontaktblöcken 2 zusammengesetzt, wobei zwischen den Blöcken Verbindungen 3 gebildet werden. Das Wasser wird oben am Kontaktkörper durch ein mit Löchern versehenes Rohrsystem 4 zugeführt und fließt längs vertikal aufgestellter, gefalteter, sich gegenseitig abstützender Kontaktplatten 5, 6 gem. der britischen Patentschrift 1 532 170 abwärts. Stromaufwärts der hinteren Begrenzungslinie 7b der Verbindungsebene 3 und stromabwärts deren vorderer Begrenzungslinie 7a ist gemäß der Erfindung ein Hindernis 8 angeordnet, durch das in der hinteren Begrenzungslinie 7b und um sie herum ein Bereich mit stark verminderter Luftgeschwindigkeit geschaffen wird.

Fig. 2 zeigt im einzelnen ein zwischen zwei Kontaktblöcken 2, einem oberen Block 21 und einem unteren Block 22, angeordnetes Hindernis, das als eine ebene Platte ausgebildet und in Nuten 9 und 10 in den Kontaktblöcken 21 bzw. 22 angebracht ist. Bei Anwendung der Erfindung in Luftbefeuchtern kann die Höhe a des Hindernisses zwischen 10 mm und 20 mm betragen, während dessen Abstand b zur hinteren Begrenzungslinie 7b 0,2 · a bis 3 · a, vorzugsweise 0,5 · a bis a, ist. Das Hindernis 8 ist längs der ganzen Länge des Blockes 21 bzw. 22 oder der Begrenzungslinie 7b angeordnet. Versuche, die mit einem Hindernis dieser Ausführungsform, mit der Höhe a = 30 mm und dem Abstand b = 0,67 · a = 20 mm, das an einem Kontaktkörper des in der britischen Patentschrift 1 532 170 beschriebenen Typs mit einer Gesamttiefe von etwa 200 mm angebracht war, durchgeführt wurden, haben gezeigt, daß von den Verbindungen Wasser erst bei Luftgeschwindigkeiten ab etwa 6 m/s mitgerissen wurde. Diese Geschwindigkeit ist höher als die, bei der Wassermitreißung von den Kontaktblöcken erfolgt. Genannte Ausbildung des Hindernisses als eine vertikal aufgestellte Platte ist keine Begrenzung der Erfindung auf diese Form, sondern das Hindernis kann viele alternative Ausführungsformen haben. Andere Beispiele des Hindernisses sind in Fig. 3 gezeigt, wo Fig. 3a eine Ausbildung zeigt, bei der das Hindernis 8 mit Neigung in Richtung des Luftstromes angeordnet ist. Gemäß Fig. 3b hat das Hindernis zwei Schenkel 8a, mit Neigung entgegengesetzt zur Richtung des Luftstromes 5, und in Fig. 3c sind die Schenkel in Richtung des Luftstromes geneigt.

Die Hindernisse können, wie vorstehend, in Plattenform aber auch durch Blockierung der Luftkanäle auf andere Weise ausgebildet sein, was beispielsweise dadurch geschehen kann, daß die Kontaktplatten in dem Bereich, der zur Bildung des Hindernisses vorgesehen ist, verformt werden.

## Patentansprüche

1. Vorrichtung an einem Kontaktkörper (1) für Flüssigkeit und Gas, vorzugsweise Wasser und Luft, wo das Gas durch den Kontaktkörper mit im wesentlichen horizontaler Strömungsrichtung strömt, und die Flüssigkeit mit im wesentlichen vertikaler Strömungsrichtung durch den Kontaktkörper fließt, und der Kontaktkörper (1) aus wenigstens zwei aufeinanderliegenden Kontaktblöcken (2) besteht, die eine dazwischenliegende Verbindungsebene (3) mit einer vorderen Begrenzungslinie (7a) längs der Vorderseite des Kontaktkörpers, wo der Gasstrom in den Kontaktkörper eintritt, und einer hinteren Begrenzungslinie (7b) längs der Rückseite des Kontaktkörpers wo der Gasstrom diesen verläßt, bilden, dadurch gekennzeichnet, daß stromaufwärts der hinteren Begrenzungslinie (7b) der Verbindungsebene (3) und im Bereich zwischen der vorderen und hinteren Begrenzungslinie (7a, 7b) ein Hindernis (8) für den Gasstrom angeordnet ist, um die Gasgeschwindigkeit entlang der ganzen Länge (c) der hinteren Begrenzungslinie (7b) zu vermindern.

2. Vorrichtung nach Anspruch 1, dadurch gekennzeichnet, daß der Abstand (b) des Hindernisses (8) von der hinteren Begrenzungslinie (7b) der Verbindungsebene (3) zwischen 20% und 300%, vorzugsweise 50%—100% der Höhe (a) des Hindernisses beträgt.

3. Vorrichtung nach den Ansprüchen 1—2, dadurch gekennzeichnet, daß die Höhe (a) des Hindernisses (8) 10—50 mm beträgt.

4. Vorrichtung nach den Ansprüchen 1—3, dadurch gekennzeichnet, daß das Hindernis (8) als eine in Nuten (9, 10) im jeweiligen Kontaktblock (2) angeordnete Platte ausgebildet ist.

5. Vorrichtung nach den Ansprüchen 1—4, dadurch gekennzeichnet, daß die Platte eben und im Kontakblock (2) vertikal angeordnet ist.

6. Vorrichtung nach den Ansprüchen 1—3, dadurch gekennzeichnet, daß das Hindernis (8) als Blockierung der Gaskanäle des Kontaktkörpers (1) ausgebildet ist, und die Blockierungen durch Verformung von Kontaktplatten (5, 6) des Kontaktkörpers bewirkt sind.

## Claims

1. Device on a contact body (1) for liquids and gases, preferably water and air, where the gas streams through the contact body with a substantially horizontal stream direction, and the liquid flows through the contact body with a substantially vertical stream direction, and the contact body (1) consists of at least two mutually contacting contact blocks (2) which form a connection plane (3) there between having a forward boundary line (7a) longitudinally of the front side of the contact body, where the gas stream enters the contact body, and a rear boundary line (7b) longitudinally of the rear side of the contact body whre the gas stream leaves this, characterised in that downstream of the rear boundary line (7b) of the connection plane (3) and in the region between the front and rear boundary lines (7a, 7b) an obstruction (8) for the gas stream is arranged in order to reduce the gas speed longitudinally of the entire length (c) of the rear boundary line (7b).

2. Device according to claim 1 characterised in that the spacing (b) of the obstruction (8) from the rear boundary line (7b) of the connection plane (3) is between 20% and 300%, preferably 50% to 100%, of the height (a) of the obstruction.

3. Device according to claims 1 to 2 characterised in that the height (a) of the obstruction (8) is 10 to 50 mm.

4. Device according to claims 1 to 3 characterised in that the obstruction (8) is formed as a plate arranged in grooves (9, 10) in the respective contact block (2).

5. Device according to claims 1 to 4 characterised in that the plate is arranged flat and vertical in the contact block (2).

6. Device according to claims 1 to 3 characterised in that the obstruction (8) is formed as blockages of the gas channels of the contact body (1) and the blockages are effected by deformation of contact plates (5, 6) of the contact body.

**Revendications**

1. Dispositif monté sur un corps de contact (1) pour liquide et gaz, de préférence eau et air, dans lequel le gaz s'écoule à travers le corps de contact avec sens d'écoulement sensiblement horizontal, et le liquide s'écoule à travers le corps de contact avec sens d'écoulement sensiblement vertical, et le corps de contact (1) est constitué d'au moins deux blocs de contact (2) superposés qui forment un plan de raccordement (3) intercalé avec une ligne de délimitation antérieure (7a) le long de la face avant du corps de contact où le courant de gaz pénètre dans le corps de contact, et une ligne de délimitation postérieure (7b) le long de la face arriére du corps de contact où le courant de gaz quitte celui-ci, caractérisé par le fait qu'en amont de la ligne de délimitation postérieure (7b) du plan de raccordement (3) et dans la zone entre les lignes de délimitation antérieure et postérieure (7a, 7b) est placé un obstacle (8) pour le courant de gaz afin de réduire la vitesse du gaz sur toute la longueur (c) de la ligne de délimitation postérieure (7b).

2. Dispositif selon la revendication 1, caractérisé par le fait que la distance (b) de l'obstacle (8) par rapport à la ligne de délimitation postérieure (7b) du plan de raccordement (3) se situe entre 20% et 300%, de préférence 50%—100% de la hauteur (a) de l'obstacle.

3. Dispositif selon les revendications 1—2, caractérisé par le fait que la hauteur (a) de l'obstacle (8) est de 10—50 mm.

4. Dispositif selon les revendications 1—3, caractérisé par le fait que l'obstacle (8) se présente sous la forme d'une plaque disposée dans des rainures (9, 10) de chaque bloc de contact (2).

5. Dispositif selon les revendications 1—4, caractérisé par le fait que la plaque est plane et disposée verticalement dans le bloc de contact (2).

6. Dispositif selon les revendications 1—3, caractérisé par le fait que l'obstacle (8) se présente sous la forme de blocages des canaux de gaz du corps de contact (1) et que les blocages sont obtenus par déformation des plaques de contact (5, 6) du corps de contact.